# FASCICULE DE BREVET EUROPEEN

(11) **EP 2 191 124 B1**
(45) Date de publication et mention de la délivrance du brevet: **07.10.2015**
(21) Numéro de dépôt: 08787376.6
(22) Date de dépôt: 21.08.2008
(51) Int. Cl.: F02K 3/06, F02K 1/08

(54) **Cone d'éjection des gaz pour turboréacteur d'aéronef, turboréacteur et ensemble moteur associés**
Gasausstosskegel für ein Turbostrahltriebwerk, zugehöriges Strahltriebwerk und Triebwerksanlage
Gas exhaust cone for an aircraft turbojet, corresponding turbojet and engine plant

(30) Priorité: 23.08.2007 FR 0757137
(43) Date de publication de la demande: 02.06.2010
(73) Titulaire: AIRBUS OPERATIONS, 31060 Toulouse (FR)
(72) Inventeur: JOURNADE, Frédéric, F-31100 Toulouse (FR); JOURNADE, Jérôme, F-31170 Tournefeuille (FR); HUBER, Jérôme, F-31000 Toulouse (FR)
(74) Mandataire: Ilgart, Jean-Christophe
(86) Numéro de dépôt international: PCT/EP2008/060932
(87) Numéro de publication internationale: WO 2009/024594

(56) Documents cités:
- FR-A- 1 478 475
- GB-A- 792 831
- US-A- 2 557 883
- US-A- 2 585 270
- US-A- 2 825 603
- US-A- 5 038 559

## Description

### DOMAINE TECHNIQUE

La présente invention se rapporte de façon générale à un ensemble moteur pour aéronef comprenant un turboréacteur disposant d'un carter moteur, cet ensemble comportant également un cône d'éjection des gaz définissant une peau radialement intérieure d'un canal annulaire de flux primaire, ce cône d'éjection étant rapporté fixement sur une extrémité arrière du carter moteur. L'invention se rapporte également à un tel cône d'éjection.

L'ensemble moteur selon l'invention comprend également un mât d'accrochage permettant globalement de suspendre le turboréacteur au-dessous de la voilure de l'aéronef, ou bien de monter ce turboréacteur au-dessus de cette même voilure, voire encore d'assembler ce moteur sur une partie arrière de fuselage de l'aéronef.

### ETAT DE LA TECHNIQUE ANTERIEURE

Le jet d'un turboréacteur d'aéronef constitue une source de bruit relativement importante, qu'il est nécessaire de réduire en particulier lors des phases de décollage et d'atterrissage de l'aéronef, afin de limiter au mieux les nuisances sonores subies par les riverains des aéroports.

De façon connue, le jet d'un turboréacteur double flux est constitué par un flux primaire chaud s'échappant d'un espace annulaire situé entre une tuyère et un cône d'éjection des gaz, et par un flux secondaire frais s'échappant d'un espace annulaire délimité radialement vers l'intérieur par cette même tuyère, de l'anglais « nozzle ».

Pour réduire le bruit de jet, il a été proposé dans l'art antérieur de placer des chevrons sur l'extrémité aval de la tuyère, de manière à permettre un meilleur mélange des flux primaire et secondaire, synonyme de réduction du bruit de jet. Une telle configuration à chevrons est par exemple connue des documents EP 1 580 419 et US 2006/053769.

D'une manière générale, la mise en oeuvre de chevrons s'avère satisfaisante en termes de réduction du bruit constatée, mais est largement pénalisante en termes de performance du turboréacteur, en raison de la perturbation aérodynamique créée sur les flux primaire secondaire et externe.

L'impact aérodynamique néfaste sur le flux secondaire est d'autant plus contraignant que sur les turboréacteurs actuels, le taux de dilution élevé implique que ce flux est censé délivrer 80% de la poussée, voire plus.

Par ailleurs, l'implantation des chevrons est souvent extrêmement difficile à réaliser, en particulier en raison d'un bord de fuite de tuyère d'épaisseur extrêmement faible.

GB 792831 divulgue l'art antérieur et le préambule de la revendication 1.

### EXPOSÉ DE L'INVENTION

L'invention a donc pour but de remédier au moins partiellement aux inconvénients mentionnés ci-dessus, relatifs aux réalisations de l'art antérieur.

La présente invention est définie dans les revendications adjointes.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef, selon un mode de réalisation préféré de la présente invention ;
- la figure 2 représente une vue éclatée en perspective d'une portion arrière du cône d'éjection des gaz appartenant à l'ensemble moteur montré sur la figure 1, et également objet de la présente invention ;
- la figure 3 représente une vue de dessus de la portion arrière du cône d'éjection des gaz montrée sur la figure 2, avec son dispositif de génération de turbulences de flux primaire en position extraite ;
- la figure 4 représente une vue de dessus de la portion arrière du cône d'éjection des gaz montrée sur les figures 2 et 3, avec son dispositif de génération de turbulences de flux primaire en position rétractée ;
- la figure 5 représente en vue en perspective de la vue montrée sur la figure 4 ;
- la figure 6 représente une vue en coupe prise le long de la ligne VI-VI de la figure 3 ; et
- la figure 6a est une vue similaire à celle de la figure 6, sur laquelle le dispositif de génération de turbulences de flux primaire est réalisé selon une alternative.

### EXPOSÉ DÉTAILLÉ DE MODES DE RÉALISATION PRÉFÉRÉS

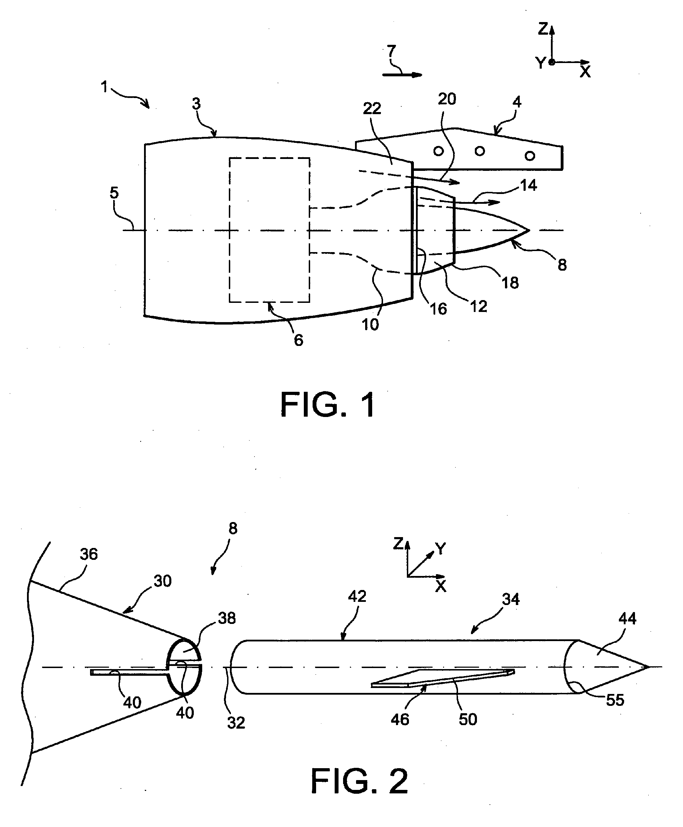

En référence tout d'abord à la figure 1, on voit un ensemble moteur 1 pour aéronef destiné à être fixé sous une aile de cet aéronef (non représentée), cet ensemble 1 comportant globalement un dispositif d'accrochage 4, un turboréacteur 6 tel qu'un turboréacteur double flux à fort taux de dilution accroché sous ce dispositif 4, et une nacelle 3 entourant le turboréacteur 6. De plus, il comprend un cône d'éjection des gaz 8 (de l'anglais « plug ») prolongeant un carter moteur 10, ce cône 8 définissant une peau radialement intérieure d'un canal annulaire 12 de flux primaire 14, centré sur l'axe longitudinal 5 du turboréacteur 6.

Dans toute la description qui va suivre, par convention, on appelle X la direction longitudinale du dispositif 4 qui est également assimilable à la direction longitudinale du turboréacteur 6 et de son cône d'éjection 8, cette direction X étant parallèle à l'axe longitudinal 5 de ce turboréacteur 6. D'autre part, on appelle Y la direction orientée transversalement par rapport au dispositif 4 et également assimilable à la direction transversale du turboréacteur 6 et de son cône d'éjection 8, et Z la direction verticale ou de la hauteur, ces trois directions X, Y et Z étant orthogonales entre-elles.

D'autre part, les termes « avant » / « amont » et « arrière » / « aval » sont à considérer par rapport à une direction de la poussée exercée par le turboréacteur 6, cette direction étant représentée schématiquement par la flèche 7.

Toujours en référence à la figure 1 sur laquelle on peut apercevoir schématiquement par la ligne 16 que le cône d'éjection 8 est rapporté fixement sur une extrémité arrière du carter moteur 10, par l'intermédiaire de moyens de fixation classiques, il est noté que l'ensemble 1 comporte en outre une structure annulaire 18 entourant le cône 8 et également rapportée sur l'extrémité arrière du carter moteur 10.

Tel que cela est connu de l'homme du métier, cette structure annulaire 18 (de l'anglais « nozzle »), et également dénommée tuyère, définit une peau radialement extérieure du canal annulaire 12 de flux primaire 14, et est également baignée extérieurement par le flux secondaire 20 s'échappant du canal annulaire secondaire 22. Ainsi, le flux primaire 14 transite entre le cône 8 et la structure/tuyère 18 avant de continuer à épouser ce même cône 8, pour ensuite être éjecté de l'ensemble moteur 1.

Enfin, il est précisé que le dispositif d'accrochage représenté sur la figure 1 correspond uniquement à la structure primaire de celui-ci, les autres éléments constitutifs de ce dispositif 4 et connus de l'homme du métier tels que les attaches moteur, les structures secondaires du type carénages aérodynamiques, etc, n'ayant pas été représentés.

En référence à présent aux figures 2 à 6, on peut apercevoir de manière plus détaillée le cône d'éjection des gaz 8, également objet de l'invention, qui est globalement constitué d'un corps principal creux et annulaire 30, de forme tronconique d'axe longitudinal 32 confondu avec l'axe 5 du turboréacteur, et d'un dispositif 34 de génération de turbulences du flux primaire.

Le corps principal creux 30 est l'élément qui définit avec sa surface extérieure tronconique la peau radialement intérieure 36 du canal annulaire 12 de flux primaire 14. En raison de sa forme tronconique, il se termine par un bord de fuite ou extrémité aval ouverte, prenant la forme d'une ouverture circulaire 38 centrée sur l'axe 32.

De cette ouverture de sortie 38 sont issues deux fentes 40 pratiquées sensiblement longitudinalement sur le corps creux, à savoir parallèlement à la direction X, vers l'avant. Elles sont de préférence réalisées symétriquement par rapport à un plan vertical de symétrie du turboréacteur (non représenté), comme cela est visible sur la figure 2.

Toujours sur cette même figure représentant une vue éclatée, on peut voir que le dispositif de génération de turbulences 34 comprend un corps cylindrique de support 42 agencé selon l'axe 32, ce corps étant par exemple de section circulaire de diamètre sensiblement identique à celui de l'ouverture de sortie 38 du corps 30. Par ailleurs, le corps de support 42 présente une extrémité aval 44 de forme conique, toujours d'axe 32, dont l'angle solide défini par le cône est identique à l'angle solide de la surface extérieure tronconique 36 du corps 30.

Sur la portion cylindrique, le corps 30 porte deux ailettes 46 (une seule visible sur la figure 2 en raison de l'angle de la perspective), chacune des ailettes étant sensiblement orientées horizontalement, à savoir dans un plan XY, et étant disposées symétriquement de part et d'autre du corps 30, par rapport au plan de symétrie vertical précité.

Chaque ailette 46, de préférence portante, se présente de préférence sous la forme générale d'une « aile delta », avec sa base orientée vers l'avant.

L'une des particularités de l'invention réside dans le fait que le dispositif 34 est monté mobile sur le corps principal creux 30 de manière à pouvoir être déplacé d'une position extraite dans laquelle il est en saillie vers l'aval par rapport à l'extrémité aval du corps 30, et une position rétractée dans laquelle il est escamoté dans ce même corps, et inversement.

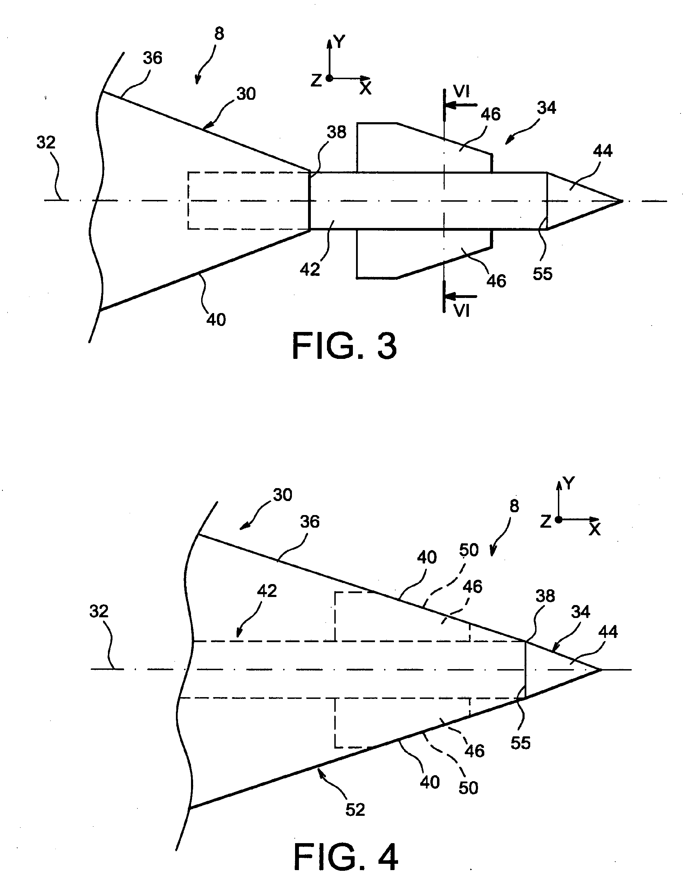

Plus précisément en référence à la figure 3, on peut voir le dispositif 34 dans sa position extraite dans laquelle il est capable, grâce en particulier aux ailettes 46 remplissant un rôle de déflecteur, de générer des turbulences sur le flux primaire en aval de l'ouverture de sortie 38, conduisant à la réduction du bruit de jet. Dans cette position, le corps de support cylindrique 42, monté de façon automatisée à coulissement selon la direction X à travers l'ouverture 38, est partiellement extrait vers l'aval, ce qui permet en particulier de déporter les ailettes dans cette même direction par rapport à l'ouverture 38. Ainsi, le flux primaire s'échappant du bord de fuite du corps principal creux 30 se propage vers l'arrière avant d'entrer au contact des ailettes 46 générant les turbulences/tourbillons escomptés, n'affectant pas ou que très peu le flux annulaire secondaire agencé radialement vers l'extérieur.

Ces tourbillons ainsi créés se propagent ensuite dans le flux primaire, vers l'aval. De par leur dynamique, les tourbillons vont ainsi modifier le mélange plus en aval, de préférence jusqu'à proximité de la fin du cône potentiel du jet primaire, et ainsi améliorer l'impact acoustique du mélange des flux primaire et secondaire.

Toujours dans cette même position adoptée lorsqu'il est nécessaire de réduire le bruit de jet du turboréacteur, à savoir en particulier lors des phases de décollage et d'atterrissage de l'aéronef, synonyme de nuisances sonores pour les riverains des aéroports, l'extrémité aval 44 de forme conique est donc située largement à distance vers l'arrière par rapport au bord de fuite du corps principal 30 definissant l'ouverture de sortie 38.

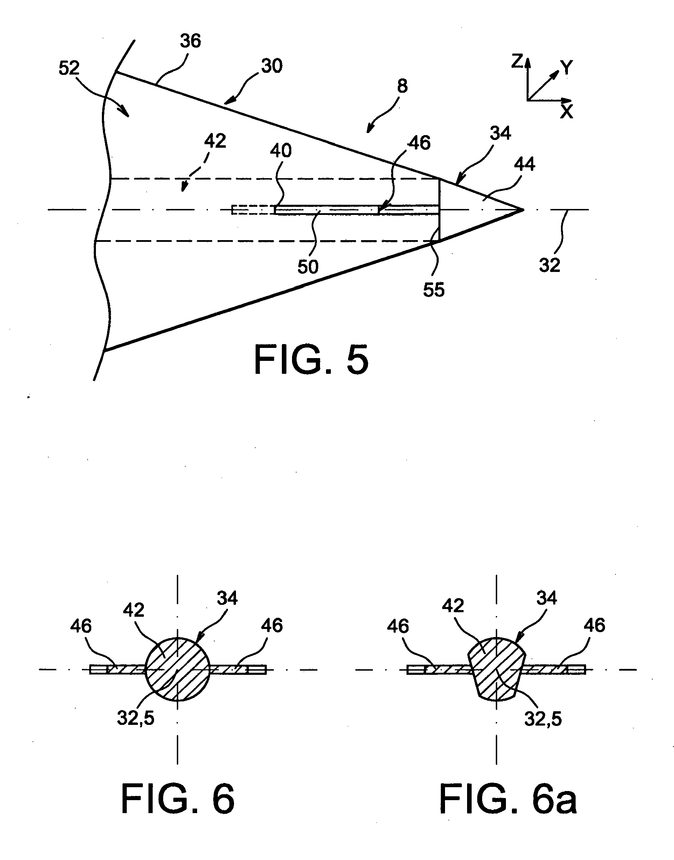

Lorsque l'aéronef se situe en phase de croisière, et qu'il n'est alors plus nécessaire de réduire le bruit de jet, et de surcroît pas souhaitable de réduire inutilement la poussée en générant des perturbations aérodynamiques du flux primaire avec le dispositif 34, ce dernier est commandé de manière classique en translation selon l'axe 32, vers l'avant afin d'atteindre sa position rétractée montrée sur les figures 4 et 5.

Durant le mouvement du dispositif 34 vers l'avant, les ailettes 46 pénètrent progressivement dans les fentes 40 situées respectivement en regard de celles-ci, assurant ainsi aucune interférence mécanique susceptible de résulter de la position en saillie latérale des ailettes 46 par rapport au corps de support 42.

Le mouvement est stoppé lorsque le dispositif 34 est suffisamment escamoté dans le corps creux 30 pour engendrer le moins de perturbation aérodynamique possible sur le flux primaire épousant l'ensemble du cône 8, ceci étant notamment obtenu en faisant en sorte d'une part que les ailettes 46 ne fassent plus saillie vers l'extérieur du corps principal creux à travers les fentes 40, et d'autre part que seule l'extrémité aval de forme conique 44 fasse saillie vers l'arrière du corps principal 30.

Plus précisément, on fait en sorte que le dispositif de génération de turbulences 34, occupant sa position rétractée, forme conjointement avec le corps principal creux 30 une surface extérieure conique 52 sensiblement continue. Pour ce faire, la surface extérieure conique 52 sensiblement continue est réalisée en partie par la surface extérieure tronconique 36 formant peau radialement intérieure du canal annulaire de flux primaire, complétée par les chants latéraux 50 des deux ailettes situés dans la continuité aérodynamique de cette surface 36, ces deux chants latéraux 50 logés respectivement dans les deux fentes 40 étant donc affleurant à la peau 36. Ainsi, il est à comprendre que les ailettes 46 comblent les fentes 40 sans faire saillie de celles-ci vers l'extérieur, ce qui procure la continuité aérodynamique recherchée.

De plus, la surface extérieure conique 52 est également complétée vers l'arrière par la surface extérieure conique de l'extrémité aval 44 du dispositif 34, puisque cette surface, en affleurant la surface tronconique 36, constitue la continuité aérodynamique de cette dernière. Pour ce faire, on prévoit comme évoqué ci-dessus que la base 55 de l'extrémité aval 44 du dispositif 34, faisant partie intégrante du corps 42, dispose d'un diamètre sensiblement identique à celui de l'ouverture de sortie 38, avec laquelle elle est sensiblement confondue lorsque le dispositif occupe sa position rétractée.

Sur la figure 6, on peut voir que les deux ailettes 46 sont effectivement disposées de façon symétrique par rapport à un plan vertical passant par l'axe 35 confondu avec l'axe 5, les ailettes se trouvant sensiblement agencées dans un même plan horizontal passant par ce même axe 32.

La figure 6a montre une alternative de réalisation du dispositif 34. La dissymétrie de la forme du corps cylindrique de support 42, par rapport à un plan horizontal, assure une portance aux ailettes horizontales 46.

Bien entendu, diverses modifications peuvent être apportées par l'homme du métier à l'invention qui vient d'être décrite, uniquement à titre d'exemple non limitatif. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire sur une partie arrière du fuselage de cet aéronef.

## Revendications

1. Cône d'éjection des gaz (8) pour turboréacteur d'aéronef, ledit cône présentant un corps principal creux (30) définissant extérieurement une peau radialement intérieure (36) d'un canal annulaire (12) de flux primaire (14) du turboréacteur,
ledit cône comprenant en outre un dispositif (34) de génération de turbulences dudit flux primaire (14), monté mobile sur ledit corps principal (30) de manière à pouvoir être déplacé d'une position extraite dans laquelle il est en saillie vers l'aval par rapport à une extrémité aval dudit corps principal creux, et une position rétractée dans laquelle il est escamoté dans ledit corps principal creux (30), et inversement, ledit dispositif (34) de génération de turbulences comprenant un corps cylindrique de support (42) d'axe parallèle à un axe (32) du cône d'éjection, ainsi qu'au moins une ailette (46) supportée par ledit corps cylindrique de support (42), **caractérisé en ce que** ledit corps principal creux (30) comprend une fente (40) pour le logement de chaque ailette (46) du dispositif (34) de génération de turbulences occupant sa position rétractée.

2. Cône d'éjection des gaz (8) selon la revendication 1, **caractérisé en ce que** le dispositif (34) comprend deux ailettes (46) sensiblement orientées horizontalement, et disposées de part et d'autre dudit corps cylindrique de support (42).

3. Cône d'éjection des gaz (8) selon l'une quelconque des revendications précédentes, **caractérisé en ce que** ledit dispositif (34) de génération de turbulences, occupant sa position rétractée, forme conjointement avec ledit corps principal creux (30) une surface extérieure conique (52) sensiblement continue.

4. Cône d'éjection des gaz (8) selon l'une quelconque des revendications précédentes, **caractérisé en ce que** ledit dispositif (34) de génération de turbulences présente une extrémité aval (44) de forme conique, située dans la continuité aérodynamique du corps principal creux (30), lorsque ledit dispositif de génération de turbulences occupe sa position rétractée.

5. Turboréacteur (6) pour aéronef comprenant un cône d'éjection des gaz (8) selon l'une quelconque des revendications précédentes.

6. Ensemble moteur (1) pour aéronef comprenant un turboréacteur (6) selon la revendication 5, un mât d'accrochage (4) du turboréacteur, ainsi qu'une nacelle (3) solidaire du mât (4) et entourant ledit turboréacteur (6).

## Patentansprüche

1. Abgaskegel (8) für ein Turbostrahltriebwerk eines Luftfahrzeugs, wobei der Kegel einen Haupthohlkörper (30) aufweist, der außen eine radial innere Haut (36) eines Ringkanals (12) eines Primärstroms (14) des Turbostrahltriebwerks definiert,
wobei der Kegel außerdem eine Vorrichtung (34) zur Erzeugung von Turbulenzen des Primärstroms (14) enthält, die derart auf den Hauptkörper (30) beweglich montiert ist, dass sie zwischen einer herausgezogenen Stellung, in der sie bezüglich eines hinteren Endes des Haupthohlkörpers nach hinten vorsteht, und einer zurückgezogenen Stellung verschoben werden kann, in der sie in den Haupthohlkörper (30) eingezogen ist, und umgekehrt, wobei die Vorrichtung (34) zur Erzeugung von Turbulenzen einen zylindrischen Trägerkörper (42) einer Achse parallel zu einer Achse (32) des Abgaskegels sowie mindestens einen Flügel (46) enthält, der von dem zylindrischen Trägerkörper (42) getragen wird, **dadurch gekennzeichnet, dass** der Haupthohlkörper (30) einen Schlitz (40) zur Unterbringung jedes Flügels (46) der Vorrichtung (34) zur Erzeugung von Turbulenzen enthält, die ihre zurückgezogene Stellung einnimmt.

2. Abgaskegel (8) nach Anspruch 1, **dadurch gekennzeichnet, dass** die Vorrichtung (34) zwei Flügel (46) enthält, die im Wesentlichen waagrecht ausgerichtet und zu beiden Seiten des zylindrischen Trägerkörpers (42) angeordnet sind.

3. Abgaskegel (8) nach einem der vorhergehenden Ansprüche, **dadurch gekennzeichnet, dass** die Vorrichtung (34) zur Erzeugung von Turbulenzen, die ihre eingezogene Stellung einnimmt, zusammen mit dem Haupthohlkörper (30) eine im Wesentlichen durchgehende kegelförmige Außenfläche (52) formt.

4. Abgaskegel (8) nach einem der vorhergehenden Ansprüche, **dadurch gekennzeichnet, dass** die Vorrichtung (34) zur Erzeugung von Turbulenzen ein hinteres Ende (44) kegliger Form aufweist, das sich in der aerodynamischen Fortsetzung des Haupthohlkörpers (30) befindet, wenn die Vorrichtung zur Erzeugung von Turbulenzen ihre eingezogene Stellung einnimmt.

5. Turbostrahltriebwerk (6) für ein Luftfahrzeug, das einen Abgaskegel (8) nach einem der vorhergehenden Ansprüche enthält.

6. Antriebseinheit (1) für ein Luftfahrzeug, die ein Turbostrahltriebwerk (6) nach Anspruch 5, ein Aufhängungssystem (4) des Turbostrahltriebwerks, sowie eine fest mit dem System (4) verbundene Gondel (3) enthält, die das Turbostrahltriebwerk (6) umgibt.

## Claims

1. A gas ejection cone (8) for an aircraft turbojet, said cone having a hollow main body (30) defining, on the outside, a radially inner skin (36) of an annular primary flow (14) channel (12) of the turbojet,
Said cone comprising a device (34) for generating turbulence of said primary flow (14), mounted so as to move on said main body (30) so as to be able to be displaced from an extracted position in which it projects toward the downstream in relation to a downstream end of said hollow main body, and a retracted position in which it is retracted into said hollow main body (30), and vice versa, said device (34) for generating turbulence comprising a cylindrical support body (42) having an axis parallel to an axis (32) of the ejection cone, as well as at least one fin (46) supported by said cylindrical support body (42), **characterized in that** said hollow main body (30) comprises a slot (40) for the housing of each fin (46) of the device (34) for generating turbulence in its retracted position..

2. The gas ejection cone (8) according to claim 1, **characterized in that** the device (34) comprises two fins (46) oriented essentially horizontally, and arranged on either side of said cylindrical support body (42).

3. The gas ejection cone (8) according to any one of the preceding claims, **characterized in that** said device (34) for generating turbulence, in its retracted position, jointly with said hollow main body (30) forms an essentially continuous conical outer surface (52).

4. The gas ejection cone (8) according to any one of the preceding claims, **characterized in that** said device (34) for generating turbulence has a conical downstream end (44), situated in the aerodynamic extension of the hollow main body (30), when said device for generating turbulence is in its retracted position.

5. A turbojet (6) for an aircraft comprising a gas ejection cone (8) according to any one of the preceding claims.

6. An engine assembly (1) for an aircraft comprising a turbojet (6) according to claim 6, an attachment mast (4) of the turbojet, as well as a nacelle (3) integral with the mast (4) and surrounding said turbojet (6).
